# EUROPEAN PATENT SPECIFICATION

(11) **EP 2 489 889 B1**
(45) Date of publication and mention of the grant of the patent: **10.06.2015**
(21) Application number: 11155196.6
(22) Date of filing: 21.02.2011
(51) Int. Cl.: F16C 25/08, F16C 27/06, F16C 33/61, F16C 19/16

(54) **Pre-stressed rolling bearing, notably for steering column.**
Vorgespanntes Wälzlager, insbesondere für eine Lenksäule
Roulement à rouleaux précontraint, particulièrement pour colonne de direction

(43) Date of publication of application: 22.08.2012
(73) Proprietor: Aktiebolaget SKF, 415 50 Göteborg (SE)
(72) Inventor: Jansen, Daniel, 37000 Tours (FR); Montboeuf, Bruno, 37390 Cerelles (FR); Bussit, Sylvain, 37380 Monnaie (FR)
(74) Representative: Casalonga, Axel

(56) References cited:
- EP-A1- 1 956 254
- CH-A- 315 972
- DE-A1- 19 744 280
- DE-A1- 19 809 176
- DE-U1- 9 400 766
- GB-A- 1 007 191

## Description

The present invention relates to pre-stressed rolling bearings, having an inner ring and an outer ring with one or more rows of rolling elements, for example balls. The rolling bearings may be, for example, those used in a steering column for automotive vehicles, industrial electric motors or electromechanical actuators.

A steering column of an automotive vehicle generally comprises an inner tube or shaft having one of its end portions linked with a steering wheel actuated by the driver and the other of its end portions linked to mechanical elements, such as a toothed rack. The shaft of the steering column is mounted inside an outer tube via two rolling bearing assemblies. Each of said rolling bearing assemblies generally comprises a rolling bearing, for example a ball bearing, with an outer ring and an inner ring between which the rolling elements or the balls are mounted and maintained by a cage element.

European patent application EP-A1-1 956 254 (SKF) discloses a pre-stressed rolling bearing comprising an inner ring, an outer ring provided with a housing and two annular wires arranged in said housing to form raceways, a row of balls disposed between said wires and the inner ring, and a pre-stressing element made from elastic material and axially disposed between a first radial flange of the housing and one of the wires. A second radial flange of the housing is pressed against the other wire so as to exert an axial compression force on the pre-stressing element and to preload the rolling bearing both axially and radially.

With such a preload rolling bearing, the elastic pre-stressing element is deformed by the associated wire and the material of said pre-stressing element may creep or flow axially towards the balls and interferes with said balls. Otherwise, the stiffness of such a pre-stressed rolling bearing may be insufficient in some cases.

One aim of the present invention is to overcome these drawbacks.

It is a particular object of the present invention to provide a pre-stressed rolling bearing which is simple to manufacture and to assembly, economic, while guaranteeing an improved stiffness and an enhanced dislocation resistance.

According to the invention, a pre-stressed rolling bearing having the features recited in claim 1 is provided.

Preferably, the radial portion of the stiffening flat washer has a radial dimension larger than the one of the associated raceway.

In one embodiment, the housing comprises a lateral flange in axial contact with a first surface of the pre-stressing element, the stiffening flat washer being mounted in axial contact with an opposite second surface of said pre-stressing element. The housing may also comprise an outer axial portion connected to the lateral flange and in contact with the separate raceways.

In one embodiment, the stiffening flat washer element is annular.

Advantageously, the stiffening flat washer element is made from synthetic material or from metal.

In one embodiment, the pre-stressing element is overmoulded onto the stiffening element. The pre-stressing element may be made from elastomer.

In one embodiment, the raceways comprise annular wires.

In another aspect of the invention, a steering column for an automotive vehicle comprises an outer tube, an inner shaft and at least one pre-stressed rolling bearing as previously defined mounted radially between the tube and the shaft.

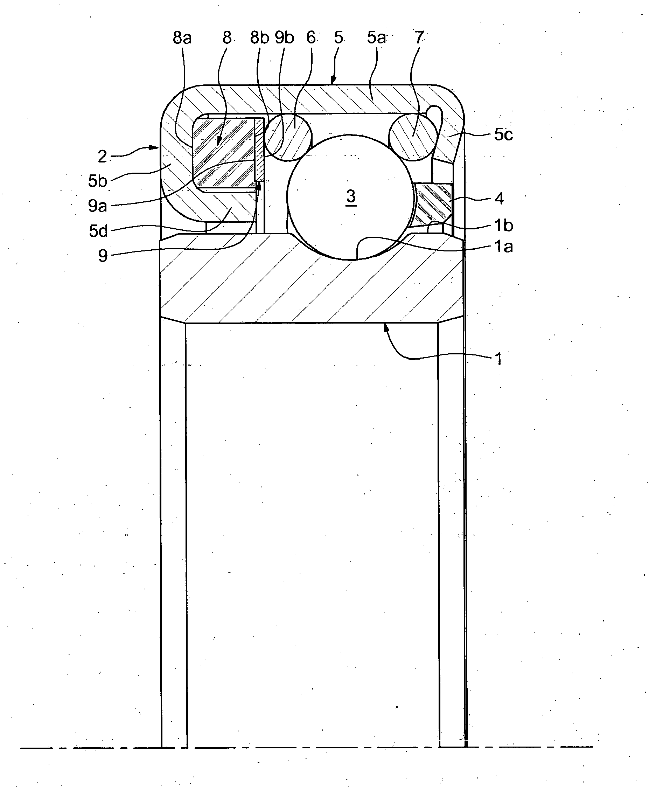

The present invention and its advantages will be better understood by studying the detailed description of a specific embodiment given by way of non-limiting example and illustrated by the appended drawing showing an axial half-section of a pre-stressed rolling bearing according to an example of the invention.

As illustrated on the Figure, which illustrates an embodiment of a pre-stressed rolling bearing according to the invention, the bearing comprising an inner ring 1, an outer ring 2, a row of rolling elements 3, that consist in the example of balls, and a cage 4 disposed radially between the rings to maintain a regular circumferential spacing between the rolling elements.

In this example, the inner ring 1 is designed to be mounted on a rotary member. It thus constitutes the rotating ring of the bearing while the outer ring 2 constitutes the non-rotating ring. The inner ring 1 is solid and has a toroidal groove 1 a provided on its exterior cylindrical surface 1b and forming a raceway for the rolling elements 3 directed radially outwards. The radius of curvature of the groove 6 is slightly greater than the radius of the rolling elements. The inner ring 1 may be manufactured by machining or by pressing a steel blank which is then ground and optionally lapped at the raceway in order to give the ring 1 its geometric characteristics and its final surface finish. In this example, the groove 1a is offset axially with respect to a radial mid-plane of the inner ring 1.

The outer ring 2 comprises an outer housing 5, two separate first and second raceways 6 and 7 for the rolling elements 3, a pre-stressing element 8 acting on one of the raceways, and a stiffening washer 9 disposed between said raceway and the pre-stressing element. The washer 9 is distinct from the raceways 6, 7.

The raceways 6, 7 are two separate parts which are preferably identical to reduce the manufacturing costs. The raceways 6, 7 are in the form of annular rings and are disposed inside the housing 5 in direct contact therewith. The raceways 6, 7 are formed of rolled wires whose ends are face-to-face when said raceways are fitted into the housing 5. Alternatively, each of raceways may be solid and continuous in the circumferential direction and may have a recess forming a raceway for the rolling elements 3. In another variant, the raceways may also be manufactured by cutting and stamping a metal sheet. The rolling elements 3 are positioned between the raceways 6, 7 of the outer ring 2 and the groove 1a of the inner ring 1.

The housing 5 is advantageously made of stamped metal sheet. The housing 5 is annular and comprises an outer axial portion 5a and two radial lateral flanges 5b and 5c, each flange extending radially inwards one end of the outer axial portion 5a. The raceways 6, 7 are arranged in radial contact with the bore of the outer axial portion 5a and are symmetrical with respect to a radial plane passing through the centre of the rolling elements 3. The lateral flange 5c has a radial dimension smaller than the dimension of the lateral flange 5b and is also thinner to be slightly curved towards the rolling elements 3 so as to contact the raceway 7 and to axially preload the rolling bearing. The cage 4 is disposed radially between the free end of the radial flange 5c and the cylindrical surface 1b of the inner ring 1.

The housing 5 also comprises an inner axial portion 5d extending axially from a small-diameter edge of the lateral flange 5b towards the rolling elements 3 while remaining distant from said rolling elements. The axial portion 5d is adapted to centre the pre-stressing element 8 inside the housing 5.

The pre-stressing element 8 is annular and disposed axially between the lateral flange 5b of the housing and the washer 9. The pre-stressing element 8 is disposed radially between the outer and inner axial portions 5a, 5d of the housing, while remaining at a distance from these two portions. A radial surface 8a of the pre-stressing element 8 is in axial contact with an internal face of the lateral flange 5b of the housing, and an opposite radial surface 8b is in axial contact with the washer 9. The pre-stressing element 8 remains spaced or at a distance away from the rolling elements 3. The pre-stressing element 8 is made from elastic material, for example an elastomer such as nitrile rubber or polyurethane. The pre-stressing element 8 may be obtained by moulding. In the illustrated embodiment, the pre-stressing element 8 has a toroidal form of a square cross-section. Alternatively, the pre-stressing element 8 may have a different profile in cross-section, for example circular.

The washer 9 has an annular form and is delimited axially by two radial opposite surfaces 9a, 9b. The radial surface 9a forms an abutment surface of the washer against the pre-stressing element 8 and the radial surface 9b forms an abutment surface for the raceway 6. Thus, the washer 9 is in axial contact against the raceway 6 on one side and in axial contact with the radial surface 8b of pre-stressing element 8 on the other side. The washer 9 is flat and has a radial dimension larger than the one of the raceway 6. The radial dimension of the washer 9 is substantially equal to the radial dimension of the surface 8b of the pre-stressing element. The washer 9 is made from rigid material, such as synthetic material like polyamide or metal. Alternatively, the washer 9 may be made from metal and advantageously may be manufactured in an economic way by cutting and stamping a metal sheet.

As previously mentioned, the lateral flange 5c of the housing is curved inwards so as to contact the raceway 7. The flange 5c presses the raceway 7 so as to exert, via the rolling elements 3, the raceway 6 and the washer 9, an axial compression force on the pre-stressing element 8 and to preload the rolling bearing both axially and radially.

The washer 9 forms a means for distributing the applied preload on the pre-stressing element 8. The preload is transmitted to the pre-stressing element 8 without concentrations of excessive stresses since the washer 9 recovers the major part of the radial surface 8b of said element. With regard to a conventional preload rolling bearing having a raceway in direct contact with the pre-stressing element, the bearing surface coming into axial contact with the pre-stressing element 8 is increased in the disclosed rolling bearing according to an example of the invention. Besides, the radial dimension of the washer 9 being substantially equal to the one of the radial surface 8b of the pre-stressing element 8, the phenomenon of creep or flow in axial direction of the material of said element is prevented.

Otherwise, the stiffness of the rolling bearing is also increased by interposing, between the pre-stressing element 8 and the associated raceway 6, the washer 9 made from rigid material. The stiffness of the rolling bearing is increased both axially and radially. Besides, the dislocation resistance of the rolling bearing is also enhanced.

In return of the axial compression force exerted on the pre-stressing element 8, said element exerts a permanent axial force on the associated raceway 6. The pre-stressing element 8 tends, via the raceway 6, to push and preload the row of rolling elements 3 against the raceway 7, and also against the groove 1a of the inner ring 1. The load applied therefore pre-stresses the rolling elements 3 against the groove 1a and the raceway 7. This axial load also tends to push the raceway 6 towards the bore of the axial portion 5a of the housing 5, via the rolling elements 3.

In the disclosed embodiment, the stiffening element is a flat washer 9 extending radially and disposed axially between the pre-stressing element 8 and the raceway 6. It should be understood that it is possible to foresee a stiffening element having a different shape, for example a L-shaped section or a U-shaped section. In such cases, the stiffening element comprises a radial portion axially disposed between the pre-stressing element 8 and the raceway 6, and one or two axial portions connected to the radial portion and extending axially towards the lateral flange 5b of the housing.

In another variant, it could also be possible to foresee a second pre-stressing element advantageously associated with a corresponding stiffening element axially interposed between said second pre-stressing element and the associated raceway.

In the disclosed embodiment, the outer ring 2 comprises a housing 5 and two separate raceways 6, 7 and the inner ring 1 is of the solid type. Alternatively, it may be possible to foresee an arrangement with the elements inverted. In another embodiment, it could also be possible to have a rolling bearing in which the inner ring and the outer ring each comprise two separate raceways, at least a pre-stressing element and at least a stiffening element enclosed in a housing as previously described.

The interposition of a stiffening element axially between the pre-stressing element and the corresponding raceway permits to obtain a pre-stressed or preloaded rolling bearing having an increased stiffness. The pre-stressing element and the stiffening element may be two separate parts. Alternatively, the pre-stressing element may be overmoulded onto said stiffening element to obtain a unitary subassembly.

## Claims

1. Pre-stressed rolling bearing comprising an inner ring (1), an outer ring (2) and a row of rolling elements (3) disposed between the rings, at least one of said rings comprising a housing (5) provided with an outer axial portion (5a), with two lateral flanges (5b, 5c) connected to the outer axial portion and with an inner axial portion (5d) extending axially from a small-diameter edge of one of said lateral flange towards the rolling elements, two raceways (6, 7) mounted in the housing and in contact with said housing, and at least a pre-stressing element (8) centred radially between the outer and inner axial portions (5a, 5d) of the housing and exerting a force on one of the raceways, said pre-stressing element being made from elastic material, **characterized in that** it further comprises at least a stiffening flat washer (9) made from rigid material and axially disposed between the pre-stressing element (8) and the associated raceway (6).

2. Rolling bearing according to claim 1, wherein the pre-stressing element (8) remains radially at a distance from the outer and inner axial portions (5a, 5d) of the housing.

3. Rolling bearing according to claim 1 or 2, wherein the radial portion of the stiffening flat washer (9) has a radial dimension larger than the one of the associated raceway (6).

4. Rolling bearing according to any of the preceding claims, wherein the lateral flange (5b) is in axial contact with a first surface (8a) of the pre-stressing element, the stiffening flat washer (9) being mounted in axial contact with an opposite second surface (8b) of said pre-stressing element.

5. Rolling bearing according to claim 4, wherein the outer axial portion (5a) is in contact with the separate raceways (6, 7).

6. Rolling bearing according to any of the preceding claims, wherein the stiffening flat washer (9) is annular.

7. Rolling bearing according to any of the preceding claims, wherein the stiffening flat washer (9) is made from synthetic material or from metal.

8. Rolling bearing according to any of the preceding claims, wherein the pre-stressing element (8) is overmoulded onto the stiffening flat washer (9).

9. Rolling bearing according to any of the preceding claims, wherein the pre-stressing element (8) is made from elastomer.

10. Rolling bearing according to any of the preceding claims, wherein the raceways (6, 7) comprise annular wires.

11. Steering column for an automotive vehicle comprising an outer tube, an inner shaft and at least one pre-stressed rolling bearing according to any of the preceding claims mounted radially between the tube and the shaft.

## Patentansprüche

1. Vorgespanntes Wälzlager, das einen inneren Ring (1), einen äußeren Ring (2) und eine Reihe von Wälzelementen (3), die zwischen den Ringen angeordnet sind, umfasst, wobei mindestens einer der Ringe ein Gehäuse (5), das mit einem äußeren axialen Teil (5a), mit zwei lateralen Flanschen (5b, 5c), die mit dem äußeren axialen Teil verbunden sind, und mit einem inneren axialen Teil (5d), der sich axial von einem Rand mit geringem Durchmesser eines der lateralen Flansche zu den Wälzelementen erstreckt, versehen ist, zwei Laufflächen (6, 7), die in dem Gehäuse angebracht sind und mit dem Gehäuse in Kontakt stehen, und mindestens ein Vorspannelement (8), das radial mittig zwischen dem äußeren und inneren axialen Teil (5a, 5d) des Gehäuses angeordnet ist und eine Kraft auf eine der Laufflächen ausübt, wobei das Vorspannelement aus einem elastischen Material hergestellt ist, umfasst, **dadurch gekennzeichnet, dass** es ferner mindestens eine flache Versteifungsunterlegscheibe (9) umfasst, die aus einem starren Material hergestellt und axial zwischen dem Vorspannelement (8) und der zugehörigen Lauffläche (6) angeordnet ist.

2. Wälzlager nach Anspruch 1, wobei das Vorspannelement (8) von dem äußeren und inneren axialen Teil (5a, 5d) des Gehäuses radial beabstandet bleibt.

3. Wälzlager nach Anspruch 1 oder 2, wobei der radiale Teil der flachen Versteifungsunterlegscheibe (9) eine radiale Abmessung aufweist, die größer als die der zugehörigen Lauffläche (6) ist.

4. Wälzlager nach einem der vorhergehenden Ansprüche, wobei der laterale Flansch (5b) mit einer ersten Fläche (8a) des Vorspannelements in axialem Kontakt steht, wobei die flache Versteifungsunterlegscheibe (9) in axialem Kontakt mit einer gegenüberliegenden zweiten Fläche (8b) des Vorspannelements angebracht ist.

5. Wälzlager nach Anspruch 4, wobei der äußere axiale Teil (5a) mit der separaten Lauffläche (6, 7) in Kontakt steht.

6. Wälzlager nach einem der vorhergehenden Ansprüche, wobei die flache Versteifungsunterlegscheibe (9) ringförmig ist.

7. Wälzlager nach einem der vorhergehenden Ansprüche, wobei die flache Versteifungsunterlegscheibe (9) aus einem synthetischen Material oder aus Metall hergestellt ist.

8. Wälzlager nach einem der vorhergehenden Ansprüche, wobei das Vorspannelement (8) an die flache Versteifungsunterlegscheibe (9) angeformt ist.

9. Wälzlager nach einem der vorhergehenden Ansprüche, wobei das Vorspannelement (8) aus Elastomer hergestellt ist.

10. Wälzlager nach einem der vorhergehenden Ansprüche, wobei die Laufflächen (6, 7) ringförmige Drähte umfassen.

11. Lenksäule für ein Kraftfahrzeug, die ein äußeres Rohr, eine innere Welle und mindestens ein vorgespanntes Wälzlager nach einem der vorhergehenden Ansprüche, das radial zwischen dem Rohr und der Welle angebracht ist, umfasst.

## Revendications

1. Roulement précontraint comprenant une bague intérieure (1), une bague extérieure (2) et une rangée d'éléments de roulement (3) disposés entre les bagues, au moins l'une desdites bagues comprenant un boîtier (5) pourvu d'une portion axiale extérieure (5a), de deux rebords latéraux (5b, 5c) reliés à la portion axiale extérieure et d'une portion axiale intérieure (5d) s'étendant axialement à partir d'un bord de petit diamètre de l'un desdits rebords latéraux en direction des éléments de roulement, deux chemins de roulement (6, 7) montés dans le boîtier et en contact avec ledit boîtier, et au moins un élément de précontrainte (8) centré radialement entre les portions axiales extérieure et intérieure (5a, 5d) du boîtier et exerçant une force sur l'un des chemins de roulement, ledit élément de précontrainte étant réalisé en matériau élastique, **caractérisé en ce qu'**il comprend en outre au moins une rondelle plate de renfort (9) réalisée en matériau rigide et disposée axialement entre l'élément de précontrainte (8) et le chemin de roulement associé (6).

2. Roulement selon la revendication 1, dans lequel l'élément de précontrainte (8) reste radialement à distance des portions axiales extérieure et intérieure (5a, 5d) du boîtier.

3. Roulement selon la revendication 1 ou 2, dans lequel la portion radiale de la rondelle plate de renfort (9) a une dimension radiale supérieure à celle du chemin de roulement associé (6).

4. Roulement selon l'une quelconque des revendications précédentes, dans lequel le rebord latéral (5b) est en contact axial avec une première surface (8a) de l'élément de précontrainte, la rondelle plate de renfort (9) étant montée en contact axial avec une deuxième surface opposée (8b) dudit élément de précontrainte.

5. Roulement selon la revendication 4, dans lequel la portion axiale extérieure (5a) est en contact avec les chemins de roulement séparés (6, 7).

6. Roulement selon l'une quelconque des revendications précédentes, dans lequel la rondelle plate de renfort (9) est annulaire.

7. Roulement selon l'une quelconque des revendications précédentes, dans lequel la rondelle plate de renfort (9) est réalisée en un matériau synthétique ou en métal.

8. Roulement selon l'une quelconque des revendications précédentes, dans lequel l'élément de précontrainte (8) est surmoulé sur la rondelle plate de renfort (9).

9. Roulement selon l'une quelconque des revendications précédentes, dans lequel l'élément de précontrainte (8) est réalisé élastomère.

10. Roulement selon l'une quelconque des revendications précédentes, dans lequel les chemins de roulement (6, 7) comprennent des fils annulaires.

11. Colonne de direction pour un véhicule automobile comprenant un tube extérieur, un arbre intérieur et au moins un roulement précontraint selon l'une quelconque des revendications précédentes monté radialement entre le tube et l'arbre.
